Europäisches Patentamt

European Patent Office

Office européen des brevets

(11) Publication number: **0 297 796 B1**

# EUROPEAN PATENT SPECIFICATION

(45) Date of publication of patent specification: **26.02.92**   (51) Int. Cl.⁵: **B65G 67/06**, B65G 53/52

(21) Application number: **88305804.2**

(22) Date of filing: **23.06.88**

(54) **Powder transfer apparatus and method.**

(30) Priority: **26.06.87 GB 8715067**

(43) Date of publication of application:
**04.01.89 Bulletin 89/01**

(45) Publication of the grant of the patent:
**26.02.92 Bulletin 92/09**

(84) Designated Contracting States:
**BE DE ES FR IT NL SE**

(56) References cited:
**US-A- 3 985 245**
**US-A- 4 465 419**

(73) Proprietor: **TITANIUM FABRICATORS LIMITED
Orgreave Crescent Handsworth
Sheffield S13 9NO(GB)**

(72) Inventor: **Rodgers, Wilfred Newbound
7 Boswell Street
Rotherham South Yorkshire S65 2ED(GB)**

(74) Representative: **Meddle, Alan Leonard et al
FORRESTER & BOEHMERT Widenmayer-
strasse 4/I
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus for and a method of transferring a pulverulent material, such as powder, between two containers or ducts and, more particularly, to an apparatus for and a method of providing a quickly positioned, extendable connection through which powder or dust can be transferred between two containers or ducts in an industrial plant.

When transferring powder or dust (or any pulverulent material) between two contains or ducts, it is essential that as little as possible of the powder or dust is allowed to escape into the surrounding atmosphere. This is especially important if the powder or dust to be transferred is toxic, very valuable or harmful to machinery housed in the vicinity of the containers or ducts. The powder or dust can often escape by virtue of a mis-alignment between corresponding flanged inlet and outlet ports of the containers or ducts or from a distortion of one or other of the flanges of the ports. This is also the problem of transferring powder or dust between two containers or ducts which do not have identically flanged ports.

It is, therefore, desirable to provide a quick and effective apparatus for and method of transferring powder or dust between two containers or ducts which compensates for distortions, mis-alignments and variations in the distance between the flanged ports of the containers or ducts.

It is also desirable to provide an apparatus for and a method of transferring powder or dust between two containers or ducts wherein no powder or dust is allowed to escape into the surrounding atmosphere and no residual powder or dust is left within the apparatus.

According to one aspect of the present invention there is provided apparatus for transferring pulverulent materials between containers or ducts comprising an extendable conduit terminated at each end by an inflatable seal assembly, means for positioning and extending the conduit to interconnect respective ports of the containers or ducts between which the material is to be transferred, means for inflating the seal assemblies to establish a sealed connection between the ends of the conduit and the containers or ducts and means for evacuating the extendable conduit after transfer of the material to remove any residual pulverulent material.

The present invention also provides a method of transferring pulverulent material between two containers or ducts, which method comprises positioning an extendable conduit having an inflatable seal assembly at each end between the two containers or ducts, extending the conduit to interconnect respective ports of the containers or ducts between which the material is to be transferred, inflating the inflatable seal assemblies to provide a sealed connection between the extendable conduit and each container or duct, transferring the pulverulent material by actuating valves on the containers or ducts, evacuating the air and residual pulverulent material from the extendable conduit, deflating the seal assemblies, retracting the extendable conduit and removing the extendable duct from between the containers or ducts.

For a better understanding of the present invention and to show how the same may be put into effect, reference will now be made, by way of example, to the accompanying figures, in which:

Figure 1 shows an apparatus embodying the present invention for transferring pulverulent material between two containers or ducts;

Figure 2 is a view from one end of the apparatus of Figure 1;

Figure 3 is a view from the other end of the apparatus of Figure 1;

Figure 4 shows a conduit extending means of the apparatus; and

Figure 5 shows the apparatus of Figure 1 being used to connect two containers in accordance with a method embodying the present invention.

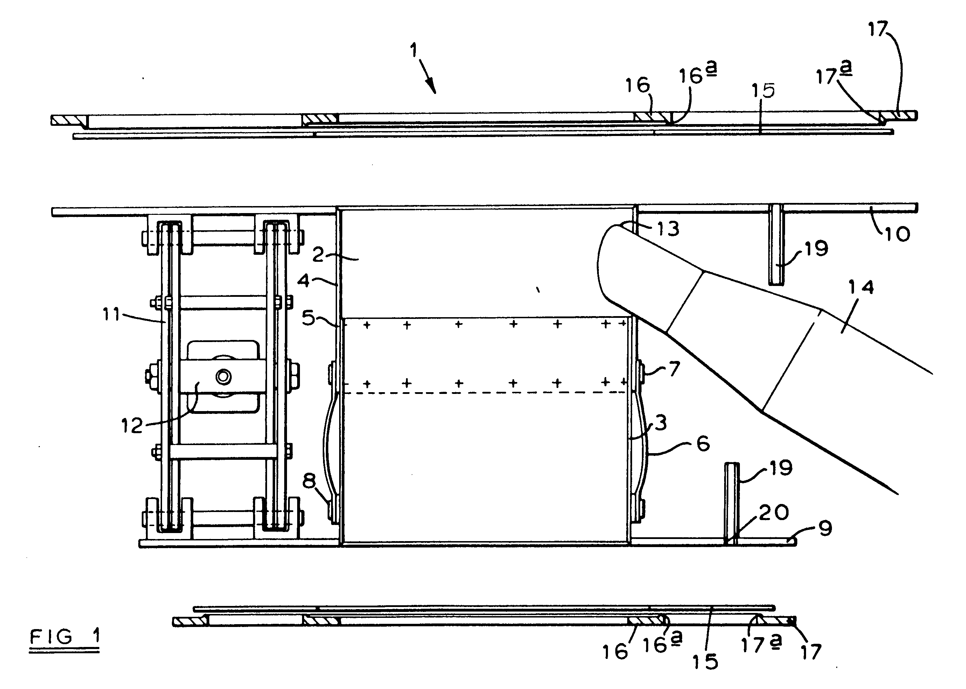

Referring now to the Figures, a powder transfer apparatus 1 in Figure 1 has an expandable connection defined by a tubular, telescopic conduit 2 comprising overlapping inner and outer sleeves 3 and 4. In the overlapping region, the inner sleeve 3 is provided with two rings of rubbing studs 5 which are made, for example, of PTFE, and upon which the outer sleeve 4 slides. The sleeves 3 and 4 of the conduit 2 are connected by an external, flexible, tubular gaiter 6 made, for example, of butyl rubber and held in position by circlips 7 and 8. The free ends of the sleeves 3 and 4 are terminated by respective radial flanges 9 and 10, the flanges 9 and 10 being designed to suit the respective ports of two containers to be interconnected. In the illustrated embodiment, the flange 9 has a septagonal periphery and the flange 10 has a circular periphery.

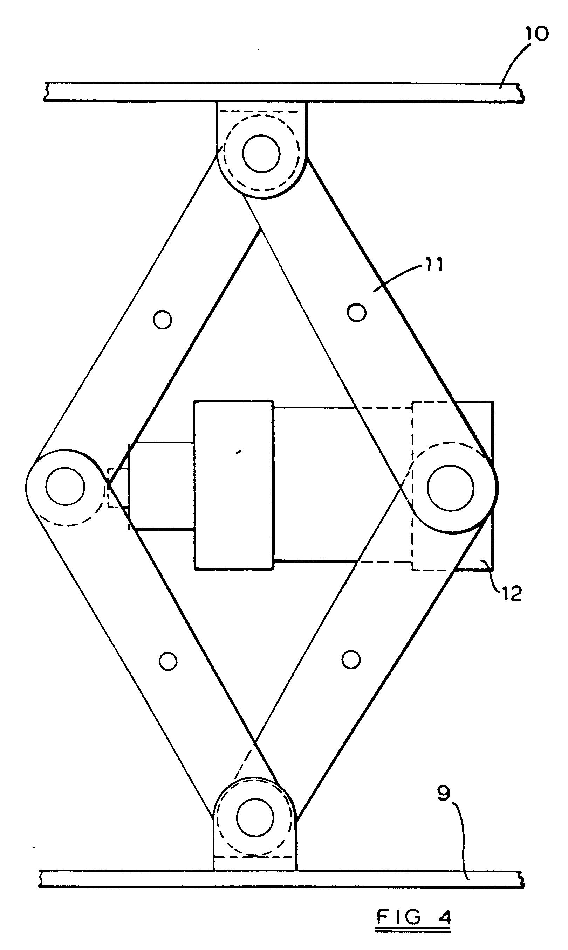

A conduit extending means is disposed between flanges 9 and 10 and comprises a mechanical linkage 11 of variable length and an actuating or positioning device 12 for varying the length of the linkage which, in the illustrated embodiment, takes the form of a scissor jack (See Figure 4) which may be pneumatically, hydraulically or mechanically controlled.

The conduit 2 is equipped with evacuation means to evacuate the air in the conduit. The evacuation means comprises an evacuation port 13 formed in the outer sleeve 4 and coupled to an evacuation pipe 14 connected to a suction pump (not shown).

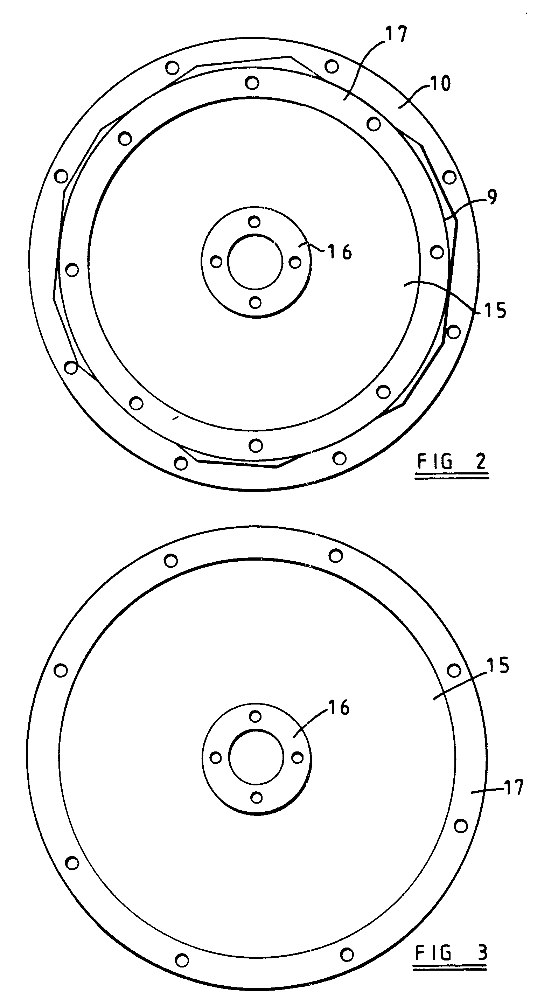

As can be seen from Figures 1 to 3, each of the flanges 9 and 10 has a seal assembly comprising an annular inflatable diaphragm of rubber or plastics material 15, an inner annular clamping ring 16 and an outer annular clamping ring 17. The inner clamping ring 16 and outer clamping ring 17 are bolted to the flanges 9 and 10 by fasteners eqispaced around the clamping rings and flanges. When in position, the inner and outer clamping rings 16 and 17 overlie the inner and outer edges, respectively, of the circular, inflatable diaphragm 15 and hold the diaphragm against the flange, allowing the diaphragm to be inflated between the inner and outer clamping rings 16 and 17.

The inner clamping ring 16 has a nubbin 16a extending around its outer periphery for engaging the inflatable diaphragm. Similarly, the outer clamping ring 17 has a nubbin 17a extending around its inner periphery for engaging the diaphragm. Air supply pipes 19 are connected to inflation ports 20 in the flanges 9 and 10 for supplying air to the respective inflatable diaphragms.

The apparatus may be mounted on suitable positioning means, such as a swivel arm (not shown) for moving the apparatus from an out-of-use position to an in-use position disposed between the ports of two containers to be interconnected.

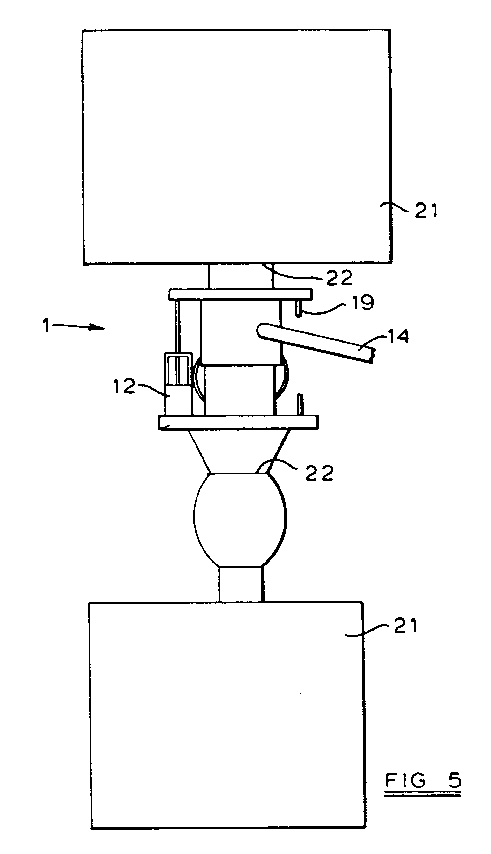

Referring now to Figure 5, the powder transfer apparatus 1 is positioned, in use, between the outlet and delivery ports of two containers 21. The telescopic conduit 2 is then extended by actuation of the positioning device 12, which in turn controls the scissor-jack so that the powder transfer apparatus 1 bridges the distance between the outlet port of one container and the delivery port of the other container. The seal assemblies (15, 16, 17) have been omitted from Figure 5 in the interest of clarity.

Air is supplied to the pipes 19 which feed air to the inflatable diaphragms 15 to inflate the diaphragms between the inner clamping ring 16 and the outer clamping ring 17, thus providing an airtight seal between the powder transfer apparatus 1 and the ports of the containers 21.

When the diaphragms 15 have been inflated, valves 22 on the inlet and delivery ports of the containers 21 are opened and the pulverulent material is allowed to flow from the one container, through the telescopic duct 3 and into the other container under the force of gravity.

After the pulverulent material has been transferred from the one container to the other, the valves 22 on the inlet and delivery ports of the containers are resealed and the air in the expandable connection is exhausted through the evacuation port 13 in the telescopic conduit 2 by the vacuum exhaustion pipe 14. This draws out the air in the expandable connection and also any residual powder which may have been left coating the inside of the telescopic conduit 2. This powder may then be added in some way to the second container or disposed of as required.

The inflatable diaphragms 15 are then deflated and the telescopic conduit 2 is retracted. The powder transfer apparatus 1 can then be easily removed from between the two containers 21 without any powder having been discharged into the atmosphere surrounding the device or any residual powder left coating the interior of the telescopic conduit 2.

It is envisaged that the telescopic conduit 2 could be produced in the form of a flexible, tubular bellows. The device could also be embodied as part of one or both of the inlet or delivery ports of a container.

## Claims

1. Apparatus for transferring pulverulent materials between containers or ducts characterised in that an extendable conduit (2) is terminated at each end by an inflatable seal assembly (15, 16, 17), means (11, 12) are provided for extending the conduit (2) to interconnect respective ports of the containers between which the material is to be transferred, means (19) are provided for inflating the seal assemblies to establish a sealed connection between the ends of the conduit (2) and the containers or ducts and means (14) are provided for evacuating the extendable conduit (2) after transfer of the material to remove any residual pulverulent material.

2. Apparatus according to claim 1, wherein a flange (9, 10) is located at each end of the extendable conduit (2) and each inflatable seal assembly (15, 16, 17) comprises an annular inflatable seal (15) and inner and outer concentric clamping rings (16, 17), the rings being releasably secured to the flanges (9, 10) and overlying inner and outer edges of the inflatable seal (15).

3. Apparatus according to claim 1 or 2, wherein the means for extending the conduit (2) comprise a scissor-jack device (12).

4. Apparatus according to claim 3, wherein the scissor-jack device (12) is pneumatically controlled.

5. Apparatus according to any preceding claim, wherein the means for evacuating the extendable conduit (2) comprise an evacuation port (13) located in the extendable conduit (2) and an exhaustion pipe (14) connected thereto.

6. Apparatus according to any preceding claim, wherein each inflatable seal (15) comprises an inflatable diaphragm of rubber or plastics material.

7. Apparatus according to any preceding claim, wherein the conduit (2) comprises a telescopic arrangement of an inner and an outer sleeve (3, 4) connected together by an external tubular flexible gaiter (6).

8. A method of transferring pulverulent materials between two containers or ducts characterised in that the method comprises the steps of positioning an extendable conduit (2) having an inflatable seal assembly (15, 16, 17) at each end between the two containers or ducts, extending the conduit (2) to interconnect respective ports of the containers or ducts between which the material is to be transferred, inflating the inflatable seal assemblies (15, 16, 17) to provide a sealed connection between the extendable conduit (2) and each container or duct, transferring the pulverulent material by actuating valves (22) on the containers or ducts, evacuating the air and residual pulverulent material from the extendable conduit (2), deflating the seal assemblies (15, 16, 17), retracting the extendable conduit (2) and removing the extendable conduit (2) from between the containers or ducts.

9. A method according to claim 10, further comprising pneumatically inflating a diaphragm (15) of rubber or plastics material in order to provide the seal connection between the extendable conduit (2) and each container or duct.

10. A method according to claim 8 or 9, characterised in that the method further comprises extending a scissor-jack device (12) to extend the extendable conduit (2).

**Revendications**

1. Appareil pour transférer des matériaux pulvérulents entre conteneurs ou conduits caractérisé en ce qu'un conduit (2) extensible se termine à chaque extrémité par un ensemble à joint gonflable (15, 16, 17), des moyens (11, 12) sont prévus pour étirer le conduit (2) pour interconnecter des orifices respectifs des conteneurs entre lesquels le matériau est à transférer, des moyens (19) sont prévus pour gonfler les ensembles à joint pour établir une connection étanche entre les extrémités du conduit (2) et les conteneurs ou conduits et des moyens (14) sont prévus pour pomper dans le conduit extensible (2) après transfert du matériau pour enlever tout matériau pulvérulent résiduel.

2. Appareil selon la revendication 1, dans lequel une bride (9, 10) est située à chaque extrémité du conduit (2) extensible et chaque ensemble à joint gonflable (15, 16, 17) comprend un joint annulaire gonflable (15) et des anneaux de bridage concentriques interne et externe (16, 17), les anneaux étant fixés de façon détachable aux brides (9, 10) et recouvrant les bords internes et externes du joint gonflable (15).

3. Appareil selon la revendication 1 ou 2, dans lequel des moyens pour étirer le conduit (2) comprennent un dispositif (12) à vérin d'écartement en forme de losange.

4. Appareil selon la revendication 3, dans lequel le dispositif (12) à vérin d'écartement en forme de losange est commandé pneumatiquement.

5. Appareil selon l'une quelconque des revendications précédentes, dans lequel les moyens pour pomper dans le conduit extensible (2) comprennent un orifice d'évacuation (13) située dans le conduit extensible (2) et un tuyau de purge (14) connecté à celui-ci.

6. Appareil selon l'une quelconque des revendications précédentes, dans laquel chaque joint gonflable (15) comprend un diaphragme gonflable en caoutchouc ou en matériau plastique.

7. Appareil selon l'une quelconque des revendications précédentes, dans lequel le conduit (2) comprend un montage téléscopique d'une manchette intérieure et d'une manchette extérieure (3, 4) connectées ensemble par l'intermédiaire d'une gaine de ressort (6) tubulaire flexible externe.

8. Méthode pour transférer des matériaux pulvérulents entre deux conteneurs ou conduits caractérisée en ce que la méthode comprend les étapes de mise en place d'un conduit extensible (2) ayant un ensemble à joint gonflable (15, 16, 17) à chaque extrémité entre les deux conteneurs ou conduits, d'étirement du conduit (2) pour interconnecter les orifices respectifs des conteneurs aux conduits entre lesquels le matériau est prévu d'être transféré, de gonflement des ensembles à joint gonflable (15, 16, 17) pour permettre une connexion étanche entre le conduit extensible (2) et chaque conteneur ou conduit, de transfert du matériau pulvérulent en actionnant des vannes (22) sur les conteneurs ou conduits, d'évacuation de l'air et du matériau pulvérulent résiduel du conduit extensible (2), de dégonflage des ensembles à joint (15, 16, 17), de rétractation du conduit extensible (2) et d'enlèvement du conduit extensible (2) d'entre les conteneurs ou conduits.

9. Méthode selon la revendication 10, comprenant de plus une étape de gonflement pneumatique d'un diaphragme (15) en caoutchouc ou matériau plastique afin de fournir une connexion étanche entre le conduit extensible (2) et chaque conteneur et conduit.

10. Méthode selon la revendication 8 ou 9, caractérisée en ce que la méthode comprend de plus l'extension d'un dispositif à vérin d'écartement en forme de losange (12) pour étirer le conduit extensible (2).

**Patentansprüche**

1. Vorrichtung zum Übergeben feinpulvriger Materialien zwischen Behältern oder Rohrleitungen, dadurch gekennzeichnet, daß eine ausziehbare Leitung (2) an jedem Ende durch eine aufblähbare Dichtanordnung (15, 16, 17) begrenzt ist, Einrichtungen (11, 12) zum Ausziehen der Leitungen (2) vorgesehen sind, um jeweilige Öffnungen der Behälter, zwischen denen das Material übergeben wird, miteinander zu verbinden, Einrichtungen (19) zum Aufblähen der Dichtanordnung vorgesehen sind, um eine Dichtverbindung zwischen den Enden der Leitung (2) und den Behältern oder Rohrleitungen einzurichten, und Einrichtungen (14) zum Evakuieren der ausziehbaren Leitung (2) nach der Übergabe des Materials, um jegliches verbleibendes feinpulvriges Material zu entfernen, vorgesehen sind.

2. Vorrichtung nach Anspruch 1, bei der ein Flansch (9, 10) an jedem Ende der ausziehbaren Leitung (2) angeordnet ist und jede aufblähbare Dichtanordnung (15, 16, 17) eine ringförmige aufblähbare Dichtung (15) und innere und äußere konzentrische Klemmringe (16, 17) aufweist, wobei die Ringe lösbar an den Flanschen (9, 10) angebracht sind und über inneren und äußeren Kanten der aufblähbaren Dichtung (15) liegen.

3. Vorrichtung nach Anspruch 1 oder 2, bei der die Einrichtungen zum Ausziehen der Leitung (2) eine Scherenhebervorrichtung (12) aufweisen.

4. Vorrichtung nach Anspruch 3, bei der die Scherenhebervorrichtung (12) pneumatisch gesteuert ist.

5. Vorrichtung nach einem der vorangehenden Ansprüche, bei der die Einrichtungen zum Evakuieren der ausziehbaren Leitung (2) eine Evakuierungsöffnung (13), die in der ausziehbaren Leitung (2) angebracht ist, und ein damit verbundenes Auslaßrohr (14) aufweisen.

6. Vorrichtung nach einem der vorangehenden Ansprüche, bei der jede aufblähbare Dichtung (15) eine aufblähbare Membran aus Gummi oder Kunststoff aufweist.

7. Vorrichtung nach einem der vorangehenden Ansprüche, bei der die Leitung (2) eine teleskopische Anordnung einer inneren und äußeren Buchse (3, 4) aufweist, die miteinander durch eine äußere, röhrenförmige, flexible Manschette (6) verbunden sind.

8. Verfahren zum Übergeben feinpulvriger Materialien zwischen zwei Behältern oder Rohrleitungen, dadurch gekennzeichnet, daß das Verfahren die Schritte des Positionierens einer ausziehbaren Leitung (2) mit einer aufblähbaren Dichtanordnung (15, 16, 17) an jedem Ende zwischen zwei Behältern oder Rohrleitungen, des Ausziehens der Leitung (2) zum Verbinden jeweiliger Öffnungen der Behälter oder Rohrleitungen, zwischen denen das Material übergeben werden soll, des Aufblähens der aufblähbaren Dichtanordnung (15, 16, 17), um eine Dichtverbindung zwischen der ausziehbaren Leitung (2) und jedem Behälter oder jeder Rohrleitung zu schaffen, des Übergebens des feinpulvrigen Materials durch Antriebsventile (22) auf den Behältern oder Rohrleitungen, des Evakuierens der Luft und restlichen feinpulvrigen Materials aus der ausziehbaren Leitung (2), des Entlastens der Dichtanordnungen (15, 16, 17), des Zurückziehens der ausziehbaren Leitung (2) und des Entfernens der ausziehbaren Leitung (2) von den Behältern oder Rohrleitungen umfaßt.

9. Verfahren nach Anspruch 8, das weiterhin das pneumatische Aufblähen einer Membran (15) aus Gummi oder Kunststoff umfaßt, um die Dichtverbindung zwischen der ausziehbaren Leitung (2) und jedem Behälter oder jeder Rohrleitung zu schaffen.

10. Verfahren nach Anspruch 8 oder 9, dadurch gekennzeichnet, daß das Verfahren weiterhin das Ausfahren einer Scherenhebervorrichtung (12) zum Ausziehen der ausziehbaren Leitung
(2) umfaßt.

FIG 1

FIG 2

FIG 3

FIG 4

FIG 5